# EUROPÄISCHE PATENTSCHRIFT

(11) **EP 1 792 000 B1**
(45) Veröffentlichungstag und Bekanntmachung des Hinweises auf die Patenterteilung: **20.08.2008**
(21) Anmeldenummer: 05779202.0
(22) Anmeldetag: 02.08.2005
(51) Int. Cl.: D06F 39/08, A47L 15/42, F16K 24/04

(54) **ROHRBELÜFTUNGSANORDNUNG FÜR EINE ABFLUSSLEITUNG IN EINEM WASSERFÜHRENDEN HAUSHALTSGERÄT**
VENTILATION DEVICE FOR THE DISCHARGE PIPE OF A WATER SUPPLY HOUSEHOLD APPLIANCE
DISPOSITIF D'AERATION D'UNE CONDUITE D'ECOULEMENT D'UN APPAREIL MENAGER CONDUISANT DE L'EAU

(30) Priorität: 07.09.2004 DE 102004043248; 01.10.2004 DE 102004047994
(43) Veröffentlichungstag der Anmeldung: 06.06.2007
(73) Patentinhaber: BSH Bosch und Siemens Hausgeräte GmbH, 81739 München (DE)
(72) Erfinder: GRAF, Gerhard, 89407 Dillingen (DE); HESTERBERG, Bernd, 89520 Heidenheim (DE)
(74) Vertreter: Dosterschill, Peter
(86) Internationale Anmeldenummer: PCT/EP2005/053775
(87) Internationale Veröffentlichungsnummer: WO 2006/027295

(56) Entgegenhaltungen:
- EP-A- 0 033 010
- WO-A-00/50684
- DD-A- 66 859
- DE-U1- 29 722 975
- PATENT ABSTRACTS OF JAPAN Bd. 017, Nr. 403 (M-1453), 28. Juli 1993 (1993-07-28) -& JP 05 079080 A (HOSHIZAKI ELECTRIC CO LTD), 30. März 1993 (1993-03-30)

## Beschreibung

Die vorliegende Erfindung betrifft eine Rohrbelüftungsanordnung für eine Abflussleitung zur Abführung eines abzupumpenden Abflussmediums in einem wasserführenden Haushaltsgerät. Die Erfindung betrifft weiterhin ein wasserführendes Haushaltsgerät mit einer derartigen Rohrbelüftungsanordnung.

In wasserführenden Haushaltsgeräten, wie einer Geschirrspülmaschine, werden als Laugenpumpen bezeichnete Pumpen zum Abpumpen von nicht mehr benötigter Spülflüssigkeit eingesetzt. Um die nicht mehr benötigte Spülflüssigkeit möglichst vollständig aus dem Haushaltsgerät entfernen zu können, wird diese üblicherweise vom tiefsten Punkt des Haushaltsgeräts aus abgepumpt. Hierbei kann der Fall auftreten, dass das hausseitige Abwasserrohr tiefer liegt als der tiefste Punkt des Haushaltsgeräts, so dass beim programmbedingten, teilweisen Abpumpen der Spülflüssigkeit eine Saugwirkung im Abwasserrohr entstehen kann. Auch kann es vorkommen, dass durch einen Unterdruck im Hausabwassersystem das Wasser ungewollt aus dem Gerät gesaugt wird.

Zur Verhinderung dieses Effekts ist es insbesondere bei Geschirrspülmaschinen üblich, eine Ablaufkanalhochführung im Gerät vorzusehen, um das Leersaugen des Geräts zu verhindern. Eine oft verwendete Ablaufkanalhoehführung weist einen vertikal verlaufenden Abschnitt einer Abflussleitung auf, die in einen U-förmig gebogenen Leitungsabschnitt übergeht, um in einen daran anschließenden wiederum vertikal angeordneten Leitungsabschnitt zu münden.

Eine Geschirrspülmaschine mit einer Ablaufkanalhochführung dieser Art ist aus DE-OS 2 023 299 bekannt, bei der an dem höchsten Punkt des U-förmigen Leitungsabschnitts der Abflussleitung ein Rohrbelüftungsteil angeordnet ist. Durch das Hochführen der Abflussleitung wird ein Auslaufen der Spülflüssigkeit bei ausgeschalteter Abwasserpumpe verhindert.

Aus DE 297 22 975 U1 ist ebenfalls eine Geschirrspülmaschine mit einer derartigen Ablaufkanalhochführung bekannt, bei der das Rohrbelüftungsventil etwa an dem höchsten Punkt der Abflussleitung in einer Abzweigung der Abflussleitung zu einem Entlüftungskanal angeordnet ist. Das Rohrbelüftungsventil weist einen als Schwimmer ausgebildeten Ventilkörper mit einem Schließkörper auf, der in Dichtungslage an einer Anlagefläche einer Trennwand zwischen der Abzweigung und dem Entlüftungskanal anliegt. Wenn die Abwasserpumpe in Funktion tritt und die verschmutzte Flüssigkeit in der Abflussleitung aufsteigend fördert, dringt die Flüssigkeit auch in die Abzweigung des Rohrbelüftungsventils ein und betätigt den Ventilkörper dabei derart, dass der Schließkörper an der Anlagefläche dichtend anliegt. Sobald der Flüssigkeitsstrom in der Abflussleitung abbricht, fällt der Ventilkörper aufgrund seines Eigengewichts nach unten, wodurch eine wirksame Belüftung der Abflussleitung und der Abwasserpumpe sicher gewährleistet ist. Bei dieser Anordnung ist von Nachteil, dass die aufsteigend geförderte verschmutzte Flüssigkeit auch zwischen Schließkörper und Anlagefläche der Trennwand gelangen kann, wobei sich an der Berührungsfläche Verschmutzungen ablagern können, die die Dichtungswirkung des Rohrbelüftungsventils maßgeblich beeinträchtigen können.

In DE 2 002 588 C3 ist ein Rückstaudoppelverschluss für Entwässerungsleitungen beschrieben, der über lange Zeiträume ein Eindringen von in gestautem Abwasser enthaltenen Feststoffen zwischen Sitz und Ventilkörper eines selbsttätigen Ventils wartungsfrei verhindert. Einem selbsttätigen Verschlussorgan zum Zurückhalten wenigstens grober Verunreinigungen wird eine sich entgegen der Rückstaurichtung öffnende Klappe mit einem Klappenkörper in Form eines Siebes oder Gitters, in Rückstaurichtung gesehen, vorgeschaltet. Bei dieser Lösung ist von Nachteil, dass auch eine solche vorgeschaltete Klappe in Form eines Siebes oder Gitters leicht verschmutzen kann, da auch sie von dem abzupumpenden Schmutzwasser durchsetzt wird.

Eine ähnliche Problematik betrifft auch die Absperrvorrichtung gemäß DD 66859 PS. Gemäß dem dort beschriebenen Absperrprinzip werden zwei hintereinander geschaltete, selbsttätig wirkende Verschlussstufen bei auftretendem Rückstau getrennt in Tätigkeit gesetzt, so dass eine praktisch absolute Sicherheit gewährleistet ist. Als Verschlussorgane dienen Bälle, die auf dem Wasserspiegel aufschwimmen und bereits bei geringfügigem Ansteigen des Kanalwassers gegen Dichtungen von Durchfluss-öffnungen gepresst werden.

Aus EP 0 033 010 B1 ist ein Schwimmerrückschlagventil mit einem Schwimmergehäuse bekannt, das eine Schwimmerkammer mit einer darin angeordneten Schwimmerkugel umschließt und eine Ein- und Auslassöffnung für die durchströmende Flüssigkeit aufweist. Die Auslassöffnung ist unterhalb der Schwimmerkammer angeordnet, wobei ein von der Auslassöffnung wegführendes Rohr in die untere Hälfte eines Siphongehäuses ragt. In der oberen Hälfte des Siphongehäuses ist eine Überstromöffnung angeordnet. Befindet sich in dem vom Siphongehäuse wegführenden Leitungssystem eine Gasblase, so kann diese im Falle eines Rückstaus nicht in das zum Schwimmergehäuse führende Leitungssystem eindringen. Das im Siphongehäuse vorhandene Wasservolumen wird nämlich vor der Gasblase her geschoben und bewirkt ein rechtzeitiges Schließen des Rückschlagventils. Mit einem derartigen Schwimmerrückschlagventil wird das Zurückströmen von Gas verhindert. Ein durch das zurückfließende Wasser mitgerissenes Schmutzteil kann sich dennoch zwischen der Schwimmerkugel und der Dichtung einklemmen.

Der vorliegenden Erfindung liegt die Aufgabe zugrunde, eine Rohrbelüftungsanordnung für eine Abflussleitung zur Abführung eines abzupumpenden Abflussmediums in einem wasserführenden Haushaltsgerät anzugeben, welche in einfacher Weise aufgebaut ist und ein sicheres Absperren eines Belüftungsventils bei aufgestautem Abflussmedium ermöglicht. Weiterhin ist es Aufgabe der vorliegenden Erfindung, ein entsprechendes wasserführendes Haushaltsgerät anzugeben.

Diese Aufgabe wird gelöst durch eine Rohrbelüftungsanordnung für eine Abflussleitung in einem wasserführenden Haushaltsgerät gemäß Patentanspruch 1 sowie durch ein wasserführendes Haushaltsgerät mit einer derartigen Rohrbelüftungsanordnung gemäß Patentanspruch 14.

Die erfindungsgemäße Rohrbelüftungsanordnung für eine Abflussleitung weist ein Rohrbelüftungsventil auf, das über einen Kanal mit der Abflussleitung zur Abführung eines abzupumpenden Abflussmediums verbunden ist. Das Rohrbelüftungsventil weist einen als Schwimmer ausgebildeten Ventilkörper zum Verschließen und Öffnen des Rohrbelüftungsventils auf. Der Ventilkörper ist in einer Schwimmerkammer angeordnet, die mit einem vom Abflussmedium separaten Arbeitsmedium gefüllt ist, um den Ventilkörper zu betätigen. Hierbei ist die Schwimmerkammer über den Kanal derart mit der Abflussleitung verbunden, dass zur Betätigung des Ventilkörpers eine pneumatische Kraftübertragung zwischen dem Abflussmedium der Abflussleitung und dem Arbeitsmedium der Schwimmerkammer über ein vom Abflussmedium separates Druckmedium erfolgt, das innerhalb des Kanals eingeschlossen ist.

Eine andere, vom Wirkungsprinzip gleichwertige Variante sieht vor, dass zur Betätigung des Ventilkörpers eine pneumatische Kraftübertragung direkt zwischen dem Abflussmedium der Abflussleitung und einer anliegenden Dichtfläche des Ventilkörpers über ein vom Abflussmedium separates Druckmedium erfolgt, das innerhalb des Kanals eingeschlossen ist. Das Arbeitsmedium der Schwimmerkammer ist dabei vorgesehen, um eine Vorspannung nach Art einer Federkraft auf den Ventilkörper auszuüben, der bei pneumatischer Kraftübertragung durch Unterdruck im Kanal in das Arbeitsmedium niedergedrückt wird, um das Belüftungsventil zu öffnen. Der Oberflächenspiegel des Arbeitsmediums ändert sich dabei nicht infolge des Unterdrucks.

Ein großer Vorteil der vorliegenden Erfindung ist, dass bei der Rohrbelüftungsanordnung der Ventilkörper des Rohrbelüftungsventils in der Regel nicht mit dem Abflussmedium, das durch eine Pumpe aus dem Haushaltsgerät abgepumpt wird, in Kontakt kommt. Vielmehr sind der Ventilkörper des Rohrbelüftungsventils und die Abflussleitung über einen separaten Kanal, der ein Druckmedium einschließt, miteinander verbunden, um den Ventilkörper des Rohrbelüftungsventils zu betätigen. Nach diesem Prinzip dient das Druckmedium der pneumatischen Kraftübertragung zwischen dem Abflussmedium und dem Arbeitsmedium der Schwimmerkammer bzw. dem Ventilkörper selbst zur Betätigung des Ventilkörpers, so dass der Ventilkörper ohne direkte Berührung durch das Abflussmedium betätigt wird. Damit ist ausgeschlossen, dass die abdichtende Fläche des Ventilkörpers mit Schmutzpartikeln aus dem Abflussmedium in Kontakt kommt, so dass stets eine gute Abdichtung des Rohrbelüftungsventils im geschlossenen Zustand gewährleistet ist. Mit dem Vorsehen der zusätzlichen Schwimmerkammer kann die Schaltfunktion des Rohrbelüftungsventils mittels dem Druck des Druckmediums und/oder durch Festlegen eines entsprechenden Oberflächenspiegels des Arbeitsmediums der Schwimmerkammer eingestellt werden. Ein direkter Kontakt des Ventilkörpers mit dem Abflussmedium und somit das Verschmutzen des Ventilkörpers wird damit vermieden. Die Belüftungsfunktion der Rohrbelüftungsanordnung bei Unterdruck in der Abflussleitung ist dennoch sichergestellt, da die hierfür benötigte Luft durch das Arbeitsmedium der Schwimmerkammer hindurch angesaugt wird. Die Rohrbelüftungsanordnung der Erfindung zeichnet sich weiterhin durch einen vergleichsweise einfachen Aufbau aus, da gegenüber der Anordnung nach DE 297 22 975 U1 keine zusätzlichen Ventilteile erforderlich sind.

Gemäß einer vorteilhaften Ausführungsform der Erfindung ist die Schwimmerkammer in zwei Bereiche unterteilt, die beide mit dem Arbeitsmedium gefüllt sind, wobei in einem ersten Bereich der Ventilkörper angeordnet ist und in einem zweiten Bereich das Arbeitsmedium an das Druckmedium angrenzt. Die pneumatische Kraftübertragung vom Druckmedium auf den Ventilkörper erfolgt demnach über das Arbeitsmedium des zweiten Bereichs, das die vom Druckmedium ausgeübte Kraft auf das Arbeitsmedium des ersten Bereichs weitergibt, um den Ventilkörper zu betätigen. Beispielsweise wird der Oberflächenspiegel des Arbeitsmediums im zweiten Bereich infolge des ausgeübten Drucks durch das Druckmedium abgesenkt, wodurch der Oberflächenspiegel des Arbeitsmediums im ersten Bereich angehoben wird, und somit der als Schwimmkörper ausgebildete Ventilkörper aufschwimmt und sich in Dichtungslage begibt.

Die Schwimmerkammer zur Aufnahme des Arbeitsmediums ist beispielsweise beckenartig ausgebildet, wobei das Arbeitsmedium im Ruhezustand eine gleichmäßige Oberfläche innerhalb der Schwimmerkammer aufweist. Eine Kammerwand unterteilt die Schwimmerkammer in den ersten und den zweiten Bereich, wobei die Kammerwand in das Arbeitsmedium eintaucht. Bevorzugt taucht die Kammerwand so tief in das Arbeitsmedium ein, dass die Kraftübertragung zwischen dem Arbeitsmedium des ersten Bereichs und dem Arbeitsmedium des zweiten Bereichs ohne Störung erfolgen kann. Im Falle eines Überdrucks in der Abflussleitung beim Abpumpen des Abflussmediums wird das Arbeitsmedium des zweiten Bereichs, das mit dem Druckmedium in Verbindung steht, durch den Druck niedergedrückt, so dass der Oberflächenspiegel des Arbeitsmediums im ersten Bereich ansteigt und den Ventilkörper anhebt, um das Rohrbelüftungsventil zu schließen. Im Falle eines Unterdrucks in der Abflussleitung, nachdem die Abflusspumpe das Abpumpen des Abflussmediums beendet hat, bewegen sich die jeweiligen Oberflächenspiegel des Arbeitsmediums des ersten und zweiten Bereichs der Schwimmerkammer in entgegengesetzter Richtung, so dass sich der Ventilkörper aus der Dichtungslage entfernt und die Luft aus einem Entlüftungskanal angesaugt werden kann.

Gemäß einer vorteilhaften Ausführungsform der Erfindung ist in der Schwimmerkammer als Arbeitsmedium Wasser enthalten. Hierbei kann die Schwimmerkammer vorteilhaft bei Inbetriebnahme des Geräts mit Frischwasser gefüllt werden, wie es beispielsweise auch bei anderen Komponenten einer Geschirrspülmaschine üblich ist. Als Druckmedium wird bevorzugt Luft verwendet, die in dem Kanal zwischen der Abflussleitung und der Schwimmerkammer eingeschlossen ist.

Gemäß einer vorteilhaften Ausführungsform der Erfindung sind der Ventilkörper und das Arbeitsmedium der Schwimmerkammer in einer Voreinstellung derart angeordnet, dass sich der Ventilkörper in Dichtungslage des Rohrbelüftungsventils befindet. Das bedeutet, dass der Ventilkörper im Ruhezustand der Rohrbelüftungsanordnung bereits die Dichtungslage einnimmt und nur im Falle eines Unterdrucks in der Abflussleitung Luft aus einem Entlüftungskanal angesaugt wird. In diesem Fall wird der Ventilkörper infolge des unterdruckbedingten Absinkens des Oberflächenspiegels des Arbeitsmediums aus der Dichtungslage heraus bewegt und Luft aus dem Entlüftungskanal durch das Arbeitsmedium hindurch in den Kanal gesaugt.

Gemäß einer Weiterbildung der Erfindung weist das Wasser führende Haushaltsgerät eine derartige Rohrbelüftungsanordnung auf, bei der das Rohrbelüftungsventil über einem im Betriebszustand des Geräts höchsten Punkt der Abflussleitung angeordnet ist. Mit einer solchen Anordnung kann wirksam verhindert werden, dass verschmutztes Abwasser in das Rohrbelüftungsventil gelangt infolge der entgegenwirkenden Schwerkraft.

Insbesondere ist zur Verhinderung des Leersaugens des Geräts eine Ablaufkanalhochführung vorgesehen, wobei die Abflussleitung zur Abführung des abzupumpenden Abflussmediums einen im Betriebszustand des Geräts vertikalen Leitungsabschnitt und einen oberhalb dazu angeordneten U-förmig gebogenen Leitungsabschnitt aufweist, der mit dem vertikalen Leitungsabschnitt verbunden ist. Erfindungsgemäß ist hierbei der Kanal der Rohrbelüftungsanordnung in Abflussrichtung des Abflussmediums nach dem U-förmigen Leitungsabschnitt mit der Abflussleitung verbunden. Damit wird bewirkt, dass sich das Abflussmedium bereits in Abwärtsrichtung nach Durchlaufen des U-förmigen Leitungsabschnitts bewegt, so dass ein Eindringen von Schmutzpartikeln in den Kanal und damit in das darüber angeordnete Rohrbelüftungsventil wesentlich erschwert wird.

Weitere vorteilhafte Aus- und Weiterbildungen der Erfindung sind in Unteransprüchen angegeben.

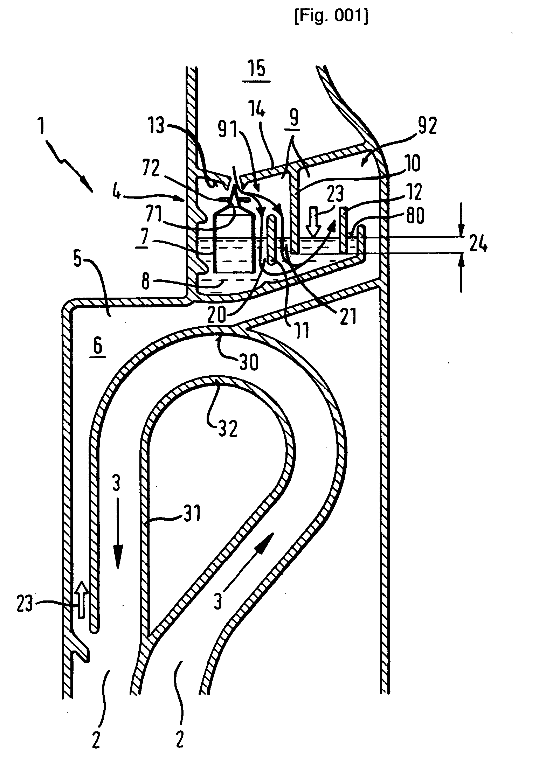

Die Erfindung wird im folgenden anhand der in der Zeichnung dargestellten Figur, die eine vorteilhafte Ausführungsform der vorliegenden Erfindung darstellt, näher erläutert.

Die Figur zeigt einen Schnitt durch eine flache Geräteeinheit mit einer Ausführungsform einer erfindungsgemäßen Rohrbelüftungsanordnung, wie sie insbesondere in einer Geschirrspülmaschine enthalten ist. Die im folgenden nicht näher erläuterte Geschirrspülmaschine weist eine nicht gezeigte Abwasserpumpe auf, mit der z.B. am Ende eines Teilprogrammabschnitts verschmutztes Spülwasser aus einem Spülbehälter abgepumpt wird, an den die Abwasserpumpe mit ihrer Saugseite angeschlossen ist. Auf der Druckseite dieser Abwasserpumpe ist die Abflussleitung 2 angeschlossen zur Abführung des abzupumpenden Spülwassers 3 in der mit den Pfeilen angedeuteten Richtung. Diese Abflussleitung 2 ist üblicherweise in einer flachen Geräteeinheit integriert, die zur Zusammenfassung verschiedener Komponenten dient, wie beispielsweise einer Einlaufleitung oder eines Flüssigkeitsvorratsbehälters. Eine solche flache Geräteeinheit ist zwischen einer Seitenwand des Spülbehälters und eines Gehäuses der Geschirrspülmaschine angeordnet. In dieser Geräteeinheit ist die Abflussleitung 2 mit ihrer Ablaufkanalhochführung integriert, wobei die Abflussleitung 2 einen vertikalen Leitungsabschnitt 31 und einen oberhalb dazu angeordneten U-förmig gebogenen Leitungsabschnitt 32 aufweist, der mit dem vertikalen Leitungsabschnitt 31 verbunden ist.

Über dem höchsten Punkt 30 der Abflussleitung 2 ist ein Rohrbelüftungsventil 4 angeordnet, das Teil der erfindungsgemäßen Rohrbelüftungsanordnung 1 ist. Das Rohrbelüftungsventil 4 ist über einen Kanal 5 mit der Abflussleitung 2 verbunden, wobei der Kanal 5 in Abflussrichtung des Spülwassers 3 nach dem U-förmigen Leitungsabschnitt 32 mit der Abflussleitung 2 verbunden ist. Das Rohrbelüftungsventil 4 weist einen als Schwimmer ausgebildeten Ventilkörper 7 zum Verschließen und Öffnen des Rohrbelüftungsventils auf. Der Ventilkörper 7 ist in einer Schwimmerkammer 9 angeordnet, die mit einem vom Spülwasser 3 separaten Arbeitsmedium 8, beispielsweise mit Frischwasser, gefüllt ist. Über das Arbeitsmedium 8 der Schwimmerkammer 9 wird der Ventilkörper 7 betätigt.

Gemäß der Ausführungsform, wie in der Figur dargestellt, ist der Ventilkörper 7 als gegen das Arbeitsmedium 8 offener Zylinder mit einer konisch zusammenlaufenden Spitze 71 ausgebildet. Weiterhin weist der Ventilkörper 7 einen separaten Schließkörper 72 auf, der an der Spitze 71 des Ventilkörpers angeordnet ist und in Dichtungslage des Rohrbelüftungsventils 4 an einer Anlagefläche 13 einer Trennwand 14 zwischen der Schwimmerkammer 9 und einem Entlüftungskanal 15 anliegt. Als Schließkörper 72 kann beispielsweise eine kreisringförmige Membran aus einem elastischen Material dienen, die durch Überstülpen über die Spitze 71 des Ventilkörpers 7 befestigt ist und in einer nicht dargestellten Nut gehalten wird. Der Schließkörper 72 liegt in der Dichtungslage an einer als kreisringförmige, in Richtung auf den Ventilkörper 7 vorragende Schulter ausgebildeten Anlagefläche 13 der Trennwand 14 zwischen der Schwimmerkammer 9 und dem Entlüftungskanal 15 an.

Die Schwimmerkammer 9 ist in zwei Bereiche 91 und 92 unterteilt, die beide mit dem Arbeitsmedium 8 gefüllt sind. In dem ersten Bereich 91 ist der Ventilkörper 7 angeordnet, in dem zweiten Bereich 92 grenzt das Arbeitsmedium 8 an das Druckmedium 6 des Kanals 5 an, der beispielsweise Luft enthält. Die Schwimmerkammer 9 ist beckenartig ausgebildet, wobei das Arbeitsmedium 8 im Ruhezustand eine gleichmäßige Oberfläche 80 innerhalb der Schwimmerkammer 9 aufweist. Eine Kammerwand 10 unterteilt die Schwimmerkammer 9 in den ersten und zweiten Bereich 91, 92 und taucht in das Arbeitsmedium 8 mit einer Überdeckung 24 ein. Mit der Abwärtsbewegung des Ventilkörpers 7 infolge der Schwerkraft und durch Anlage eines geringen Unterdrucks in der Abflussleitung 2 wird die Abflussleitung über den Kanal 5 sicher und wirksam belüftet.

In der dargestellten Figur ist das Rohrbelüftungsventil 4 in einer Offenstellung als Ruhelage gezeigt. Gemäß einer anderen Ausführungsform ist der Ventilkörper 7, und entsprechend das Arbeitsmedium 8, in einer Voreinstellung derart angeordnet, dass sich der Ventilkörper 7 in Dichtungslage des Rohrbelüftungsventils 4 befindet. Das bedeutet, die Schwimmerkammer 9 ist so weit mit dem Arbeitsmedium 8 gefüllt, dass der aufschwimmende Ventilkörper 7 mit seinem Schließkörper 72 gegen die Anlagefläche 13 der Trennwand 14 drückt, um das Ventil zu schließen.

Wenn die Abwasserpumpe in Funktion tritt und das Spülwasser 3 in der Abflussleitung 2 aufsteigend fördert, dringt das Spülwasser auch ein Stück in den Kanal 5 ein und übt damit einen Druck auf die im Kanal 5 eingeschlossene Luft 6 aus. Die innerhalb des Kanals 5 eingeschlossene Luft 6 sorgt somit für eine pneumatische Kraftübertragung (angedeutet durch die mit Bezugszeichen 23 gekennzeichneten Kräfte) zwischen dem Spülwasser 3 innerhalb der Abflussleitung 2 und dem Arbeitsmedium 8 der Schwimmerkammer 9. Die dadurch auf das Arbeitsmedium 8 ausgeübte Kraft 23 drückt den Oberflächenspiegel 80 des Arbeitsmediums 8 im zweiten Bereich 92 nach unten, so dass der Oberflächenspiegel 80 des Arbeitsmediums 8 im ersten Bereich 91 sich nach oben bewegt. Dadurch schwimmt der Ventilkörper 7 auf und wird in Dichtungslage bewegt bzw. wird weiter in die Dichtungslage gepresst. Damit ist gewährleistet, dass der Schließkörper 72 des Ventilkörpers 7 an der Anlagefläche 13 dichtend anliegt. Der Ventilkörper 7 ist mittels vorstehender Rippen in der linken Seitenwand der Schwimmerkammer 9 und bevorzugt durch eine separate Führungsvorrichtung 11 geführt, die innerhalb der Schwimmerkammer 9 angeordnet ist.

Sobald der Flüssigkeitsstrom des Spülwassers 3 in der Abflussleitung 2 abbricht, entsteht durch das abfließende Spülwasser 3 ein Unterdruck in der Abflussleitung 2, so dass im Kanal 5 ein Unterdruck entsteht. Durch diesen Unterdruck wird eine zur Kraft 23 entgegengesetzte Kraft auf das Arbeitsmedium 8 im zweiten Bereich 92 der Schwimmerkammer 9 ausgeübt, so dass der Oberflächenspiegel 80 des Arbeitsmediums 8 im Bereich 92 ansteigt und der Oberflächenspiegel des Arbeitsmediums 8 im Bereich 91 abfällt. Dadurch wird der Ventilkörper 7 aus seiner Dichtungslage herausbewegt und die Luft aus dem Entlüftungskanal 15 angesaugt. Zu diesem Zweck ist vorteilhaft zwischen der Führungsvorrichtung 11 und der Kammerwand 10 der Schwimmerkammer 9 ein Seitenkanal 21 innerhalb der Schwimmerkammer 9 gebildet, über den die Luft aus dem Entlüftungskanal 15 angesaugt wird und durch das Arbeitsmedium hindurch in den Kanal 5 gelangt. Ein weiterer Luftstrom ergibt sich über den Kanal 20 zwischen der Führungsvorrichtung 11 und dem Ventilköper 7. Um das Arbeitsmedium 8 bei Ansaugen der Luft aus dem Entlüftungskanal 15 zu beruhigen, ist bevorzugt innerhalb der Schwimmerkammer 9 wenigstens eine vertikal angeordnete Rippe 12 vorgesehen, die teilweise in das Arbeitsmedium 8 eintaucht. Die Eintauchtiefe der Kammerwand 10 in das Arbeitsmedium 8 (Überdeckung 24) ist so gewählt, dass eine wirksame Betätigung des Ventilkörpers 7 erfolgen kann, ohne die wirksame Luftsperre aufzuheben. Damit kann eine sichere Kraftübertragung zwischen dem Arbeitsmedium 8 des Bereichs 91 und dem Arbeitsmedium 8 des Bereichs 92 erfolgen. Mit der Abwärtsbewegung des Ventilkörpers 7 infolge seiner Schwerkraft wird somit eine wirksame Belüftung der Abflussleitung 2 über den Kanal 5 sicher gewährleistet.

Eine andere, vom Wirkungsprinzip gleichwertige Variante sieht vor, dass zur Betätigung des Ventilkörpers 7 eine pneumatische Kraftübertragung direkt zwischen dem Abflussmedium 3 der Abflussleitung 2 und einer an der Anlagefläche 13 bzw. Trennwand 14 anliegenden Dichtfläche des Ventilkörpers 7 über das Druckmedium 6 erfolgt, das innerhalb des Kanals 5 eingeschlossen ist. In diesem Fall entfällt die Kammerwand 10 der Schwimmerkammer 9, so dass der Kanal 5 direkt mit dem Ventilkörper 7 in Wechselwirkung steht. Das Arbeitsmedium 8 der Schwimmerkammer 9 ist dabei vorgesehen, um eine Vorspannung nach Art einer Federkraft auf den Ventilkörper 7 auszuüben, der bei pneumatischer Kraftübertragung durch Unterdruck im Kanal 5 in das Arbeitsmedium 8 niedergedrückt wird, um das Belüftungsventil zu öffnen. Der Oberflächenspiegel des Arbeitsmediums 8 ändert sich dabei nicht infolge des Unterdrucks. Mit der Druckerhöhung durch die Vorspannung wird die Dichtkraft des Schwimmers ebenfalls erhöht.

Die erfindungsgemäße Rohrbelüftungsanordnung bietet dabei den wesentlichen Vorteil, dass das Rohrbelüftungsventil 4 bzw. der Ventilkörper 7 nicht mit Schmutzwasser in Berührung kommt, das in der Abflussleitung 2 durch die Abflusspu mpe abgepumpt wird. Zum einen wirkt die im Kanal 5 eingeschlossene Luft 6 als pneumatische Sperre gegen Schmutzwasser, das in den Kanal 5 eindringt, zum anderen erschwert das Eigengewicht der Schmutzpartikel das Vordringen zum Rohrbelüftungsventil 4, da dieses über dem höchsten Punkt 30 der Abflussleitung 2 angeordnet ist. Dadurch können schmutzbedingte Ausfälle des Rohrbelüftungsventils wirksam verhindert werden, da ein direkter Kontakt des Ventilkörpers 7 mit dem Spülwasser 3 und damit das Verschmutzen des Ventilkörpers vermieden wird.

**Bezugszeicbenliste**

1 Rohrbelüftungsanordnung

2 Abflussleitung

3 Abflussmedium

4 Rohrbelüftungsventil

5 Kanal

6 Druckmedium

7 Ventilkörper

8 Arbeitsmedium

9 Schwimmerkammer

10 Kammerwand

11 Führungsvorrichtung

12 Rippe

13 Anlagefläche

14 Trennwand

15 Entlüftungskanal

20, 21 Seitenkanal

23 Kraft

24 Überdeckung

71 Spitze

72 Schließkörper

80 Oberfläche des Arbeitsmediums

91 erster Bereich

92 zweiter Bereich

## Patentansprüche

1. Rohrbelüftungsanordnung für eine Abflussleitung zur Abführung eines abzupumpenden Abflussmediums in einem wasserführenden Haushaltsgerät, - mit einem Rohrbelüftungsventil (4), das über einen Kanal (5) mit einer Abflussleitung (2) zur Abführung eines abzupumpenden Abflussmediums (3) verbunden ist,
- bei der das Rohrbelüftungsventil (4) einen als Schwimmer ausgebildeten Ventilkörper (7) zum Verschließen und Öffnen des Rohrbelüftungsventils aufweist, **dadurch gekennzeichnet dass** der Ventilkörper (7) in einer Schwimmerkammer (9) angeordnet ist, die mit einem vom Abflussmedium (3) separaten Arbeitsmedium (8) gefüllt ist, um den Ventilkörper zu betätigen,
und die Schwimmerkammer (9) über den Kanal (5) derart mit der Abflussleitung (2) verbunden ist, dass zur Betätigung des Ventilkörpers (7) eine pneumatische Kraftübertragung (23) zwischen dem Abflussmedium (3) der Abflussleitung (2) und dem Arbeitsmedium (8) der Schwimmerkammer (9) oder zwischen dem Abflussmedium (3) der Abflussleitung (2) und einer anliegenden Dichtfläche des Ventilkörpers (7) über ein vom Abflussmedium (3) separates Druckmedium (6) erfolgt, das innerhalb des Kanals (5) eingeschlossen ist.

2. Rohrbelüftungsanordnung nach Anspruch 1, **dadurch gekennzeichnet, dass** die Schwimmerkammer (9) in zwei Bereiche (91, 92) unterteilt ist, die beide mit dem Arbeitsmedium (8) gefüllt sind, wobei in einem ersten Bereich (91) der Ventilkörper (7) angeordnet ist und in einem zweiten Bereich (92) das Arbeitsmedium (8) an das Druckmedium (6) angrenzt.

3. Rohrbelüftungsanordnung nach Anspruch 2, **dadurch gekennzeichnet, dass**
- die Schwimmerkammer (9) zur Aufnahme des Arbeitsmediums (8) beckenartig ausgebildet ist, wobei das Arbeitsmedium (8) im Ruhezustand eine gleichmäßige Oberfläche (80) innerhalb der Schwimmerkammer (9) aufweist,
- eine Kammerwand (10) die Schwimmerkammer (9) in den ersten und zweiten Bereich (91, 92) unterteilt, wobei die Kammerwand (10) in das Arbeitsmedium (8) eintaucht.

4. Rohrbelüftungsanordnung nach Anspruch 3, **dadurch gekennzeichnet, dass** die Kammerwand (10) so tief in das Arbeitsmedium (8) eintaucht, dass eine Kraftübertragung zwischen dem Arbeitsmedium (8) des ersten Bereichs (91) und dem Arbeitsmedium (8) des zweiten Bereichs (92) erfolgen kann.

5. Rohrbelüftungsanordnung nach einem der vorhergehenden Ansprüche, **dadurch gekennzeichnet, dass** innerhalb der Schwimmerkammer (9) eine separate Führungsvorrichtung (11) zur Führung des Ventilkörpers (7) angeordnet ist.

6. Rohrbelüftungsanordnung nach Anspruch 5, **dadurch gekennzeichnet, dass** zwischen der Führungsvorrichtung (11) und der Kammerwand (10) der Schwimmerkammer (9) ein Seitenkanal (21) innerhalb der Schwimmerkammer gebildet ist.

7. Rohrbelüftungsanordnung nach einem der vorhergehenden Ansprüche, **dadurch gekennzeichnet, dass** innerhalb der Schwimmerkammer (9) wenigstens eine vertikal angeordnete Rippe (12) angeordnet ist, die teilweise in das Arbeitsmedium (8) eintaucht, um das Arbeitsmedium (8) bei Ansaugen von Luft zu beruhigen.

8. Rohrbelüftungsanordnung nach einem der vorhergehenden Ansprüche, **dadurch gekennzeichnet, dass** in dem Kanal (5) als Druckmedium (6) Luft eingeschlossen ist.

9. Rohrbelüftungsanordnung nach einem der vorhergehenden Ansprüche, **dadurch gekennzeichnet, dass** in der Schwimmerkammer (9) als Arbeitsmedium (8) Wasser enthalten ist.

10. Rohrbelüftungsanordnung nach einem der vorhergehenden Ansprüche, **dadurch gekennzeichnet, dass** der Ventilkörper (7) in Dichtungslage des Rohrbelüftungsventils (4) an einer Anlagefläche (13) einer Trennwand (14) zwischen der Schwimmerkammer (9) und einem Entlüftungskanal (15) anliegt.

11. Rohrbelüftungsanordnung nach einem der vorhergehenden Ansprüche, **dadurch gekennzeichnet, dass** der Ventilkörper (7) als gegen das Arbeitsmedium (8) offener Zylinder mit einer konisch zusammenlaufenden Spitze (71) ausgebildet ist.

12. Rohrbelüftungsanordnung nach einem der vorhergehenden Ansprüche, **dadurch gekennzeichnet, dass** der Ventilkörper (7) einen separaten Schließkörper (72) aufweist, der an einer Spitze (71) des Ventilkörpers angeordnet ist und in Dichtungslage des Rohrbelüftungsventils (4) an einer Anlagefläche (13) einer Trennwand (14) zwischen der Schwimmerkammer (9) und einem Entlüftungskanal (15) anliegt.

13. Rohrbelüftungsanordnung nach einem der vorhergehenden Ansprüche, **dadurch gekennzeichnet, dass** der Ventilkörper (7) und das Arbeitsmedium (8) in einer Voreinstellung derart angeordnet sind, dass sich der Ventilkörper (7) in Dichtungslage des Rohrbelüftungsventils (4) befindet.

14. Wasserführendes Haushaltsgerät, **dadurch gekennzeichnet, dass** dieses eine Rohrbelüftungsanordnung (1) nach einem der vorhergehenden Ansprüche aufweist.

15. Wasserführendes Haushaltsgerät nach Anspruch 14, **dadurch gekennzeichnet, dass** das Rohrbelüftungsventil (4) über einem im Betriebszustand des Geräts höchsten Punkt (30) der Abflussleitung (2) angeordnet ist

16. Wasserführendes Haushaltsgerät nach Anspruch 14 oder 15, **dadurch gekennzeichnet, dass**
- die Abflussleitung (2) zur Abführung des abzupumpenden Abflussmediums (3) einen im Betriebszustand des Geräts vertikalen Leitungsabschnitt (31) und einen oberhalb dazu angeordneten U-förmig gebogenen Leitungsabschnitt (32) aufweist, der mit dem vertikalen Leitungsabschnitt (31) verbunden ist,
- der Kanal (5) der Rohrbelüftungsanordnung (1) in Abflussrichtung des Abflussmediums (3) nach dem U-förmigen Leitungsabschnitt (32) mit der Abflussleitung (2) verbunden ist.

17. Wasserführendes Haushaltsgerät nach einem der Ansprüche 14 bis 16, **dadurch gekennzeichnet, dass** dieses als Geschirrspülmaschine ausgebildet ist.

## Claims

1. Pipe ventilating arrangement for an outflow duct for discharge of an outflow medium, which is to be pumped away, in a water-conducting domestic appliance, with a pipe ventilating valve (4) which is connected by way of a channel (5) with an outflow duct (2) for discharge of an outflow medium (3) to be pumped away, in which the pipe ventilating valve (4) comprises a valve body (7), which is constructed as a float, for closing and opening the pipe ventilating valve, **characterised in that** the valve body (7) is arranged in a float chamber (9), which is filled with a working medium (8) separate from the outflow medium (3) in order to actuate the valve body, and the float chamber (9) is connected by way of the channel (5) with the outflow duct (2) in such a manner that for actuation of the valve body (7) a pneumatic force transmission (23) between the outflow medium (3) of the outflow duct (2) and the working medium (8) of the float chamber (9) or between the outflow medium (3) of the outflow duct (2) and a contacting sealing surface of the valve body (7) takes place by way of a pressure medium (6) which is separate from the outflow medium (3) and which is enclosed within the channel (5).

2. Pipe ventilating arrangement according to claim 1, **characterised in that** the float chamber (9) is subdivided into two regions (91, 92) which are both filled with the working medium (8), wherein the valve body (7) is arranged in a first region (91) and the working medium (8) adjoins the pressure medium (6) in a second region (92).

3. Pipe ventilating arrangement according to claim 2, **characterised in that** the float chamber (9) is formed to be beaker-like for reception of the working medium (8), wherein the working medium (8) in the rest state has a uniform surface (80) within the float chamber (9), and a chamber wall (10) subdivides the float chamber (9) into the first and second regions (91, 92), wherein the chamber wall (10) enters into the working medium (8).

4. Pipe ventilating arrangement according to claim 3, **characterised in that** the chamber wall (10) enters into the working medium (8) to such a depth that a force transmission can take place between the working medium (8) of the first region (91) and the working medium (8) of the second region (92).

5. Pipe ventilating arrangement according to any one of the preceding claims, **characterised in that** a separate guide device (11) for guidance of the valve body (7) is arranged within the float chamber (9).

6. Pipe ventilating arrangement according to claim 5, **characterised in that** a side channel (21) is formed within the float chamber between the guide device (11) and the chamber wall (10) of the float chamber (9).

7. Pipe ventilating arrangement according to any one of the preceding claims, **characterised in that** at least one vertically arranged rib (12) is arranged within the float chamber (9) and enters partly into the working medium (8) in order to calm the working medium (8) when air is inducted.

8. Pipe ventilating arrangement according to any one of the preceding claims, **characterised in that** air is included in the channel (5) as pressure medium (6).

9. Pipe ventilating arrangement according to any one of the preceding claims, **characterised in that** water is contained in the float chamber (9) as working medium (8).

10. Pipe ventilating arrangement according to any one of the preceding claims, **characterised in that** the valve body (7) in sealing position of the pipe ventilating valve (4) bears against a contact surface (13) of a partition wall (14) between the float chamber (9) and a relief channel (15).

11. Pipe ventilating arrangement according to any one of the preceding claims, **characterised in that** the valve body (7) is formed as a cylinder, which is open towards the working medium (8), with a conically running-in cone (71).

12. Pipe ventilating arrangement according to any one of the preceding claims, **characterised in that** the valve body (7) comprises a separate closure body (72), which is arranged at tip (71) of the valve body and which in sealing position of the pipe ventilating valve (4) bears against a contact surface (13) of a partition wall (14) between the float chamber (9) and a relief channel (15).

13. Pipe ventilating arrangement according to any one of the preceding claims,
**characterised in that** the valve body (7) and the working medium (8) are so arranged in an initial setting that the valve body (7) is disposed in sealing position of the pipe ventilating valve (4).

14. Water-conducting domestic appliance, **characterised in that** this comprises a pipe ventilating arrangement (1) according to any one of the preceding claims.

15. Water-conducting domestic appliance according to claim 14, **characterised in that** the pipe ventilating valve (4) is arranged above a point (30) which is highest in the operational state of the appliance.

16. Water-conducting domestic appliance according to claim 14 or 15, **characterised in that** the outflow duct (2) has for discharge of the outflow medium (3) to be pumped away a duct section (31), which is vertical in the operational state of the appliance, and a duct section (32), which is arranged thereabove and bent to be U-shaped and which is connected with the vertical duct section (31), and the channel (5) of the pipe ventilating arrangement (1) is connected with the outflow duct (2) after the U-shaped duct section (32) in the outflow direction of the outflow medium (3).

17. Water-conducting domestic appliance according to any one of claims 14 to 16, **characterised in that** this is constructed as a dishwashing machine.

## Revendications

1. Dispositif d'aération de tuyau pour une conduite d'écoulement destinée à l'évacuation d'un fluide d'écoulement à pomper dans un appareil ménager à circulation d'eau, comportant une soupape d'aération de tuyau (4) qui est reliée, par l'intermédiaire d'un canal (5), à une conduite d'écoulement (2) destinée à l'évacuation d'un fluide d'écoulement (3) à pomper,
- dans lequel la soupape d'aération de tuyau (4) comporte un corps de soupape (7) qui se présente sous la forme d'un flotteur et est destiné à fermer et à ouvrir la soupape d'aération de tuyau,
**caractérisé en ce que**
- le corps de soupape (7) est situé dans une chambre à flotteur (9) qui est remplie d'un fluide de travail (8) séparé du fluide d'écoulement (3) pour actionner le corps de soupape et
- la chambre à flotteur (9) est reliée de manière telle à la conduite d'écoulement (2), via le canal (5), que, pour actionner le corps de soupape (7), il se produit une transmission de force pneumatique (23) entre le fluide d'écoulement (3) de la conduite d'écoulement (2) et le fluide de travail (8) de la chambre à flotteur (9) ou entre le fluide d'écoulement (3) de la conduite d'écoulement (2) et une surface d'étanchéité adjacente du corps de soupape (7) par l'intermédiaire d'un fluide de pression (6) séparé du fluide d'écoulement (3) et renfermé dans le canal (5).

2. Dispositif d'aération de tuyau selon la revendication 1, **caractérisé en ce que** la chambre à flotteur (9) est subdivisée en deux parties (91, 92) qui sont toutes les deux remplies du fluide de travail (8), le corps de soupape (7) étant situé dans une première partie (91) et le fluide de travail (8) étant adjacent au fluide de pression (6) dans une deuxième partie (92).

3. Dispositif d'aération de tuyau selon la revendication 2, **caractérisé en ce que**
- la chambre à flotteur (9) est réalisée en forme de bassin pour recevoir le fluide de travail (8), le fluide de travail (8), à l'état de repos, présentant une surface (80) régulière dans la chambre à flotteur (9),
- une paroi (10) de la chambre subdivise la chambre à flotteur (9) en la première et la deuxième partie (91, 92), la paroi (10) de la chambre s'enfonçant dans le fluide de travail (8).

4. Dispositif d'aération de tuyau selon la revendication 3, **caractérisé en ce que** la paroi (10) de la chambre s'enfonce dans le fluide de travail (8) à une profondeur telle qu'il peut se produire une transmission de force entre le fluide de travail (8) de la première partie (91) et le fluide de travail (8) de la deuxième partie (92).

5. Dispositif d'aération de tuyau selon l'une des revendications précédentes, **caractérisé en ce qu'**est situé, dans la chambre à flotteur (9), un dispositif de guidage séparé (11) pour guider le corps de soupape (7).

6. Dispositif d'aération de tuyau selon la revendication 5, **caractérisé en ce qu'**est réalisé, entre le dispositif de guidage (11) et la paroi (10) de la chambre à flotteur (9), un canal latéral (21) dans la chambre à flotteur.

7. Dispositif d'aération de tuyau selon l'une des revendications précédentes, **caractérisé en ce qu'**est située, dans la chambre à flotteur (9), au moins une ailette verticale (12) qui s'enfonce en partie dans le fluide de travail (8) pour calmer le fluide de travail (8) à l'aspiration d'air.

8. Dispositif d'aération de tuyau selon l'une des revendications précédentes, **caractérisé en ce que** de l'air est renfermé dans le canal (5) en tant que fluide de pression (6).

9. Dispositif d'aération de tuyau selon l'une des revendications précédentes, **caractérisé en ce que** de l'eau est contenue dans la chambre à flotteur (9) en tant que fluide de travail (8).

10. Dispositif d'aération de tuyau selon l'une des revendications précédentes, **caractérisé en ce que** le corps de soupape (7), dans la position d'étanchéité de la soupape d'aération de tuyau (4), est appliqué contre une surface de contact (13) d'une cloison (14) entre la chambre à flotteur (9) et un canal d'aération (15).

11. Dispositif d'aération de tuyau selon l'une des revendications précédentes, **caractérisé en ce que** le corps de soupape (7) se présente sous la forme d'un cylindre ouvert sur le fluide de travail (8) avec une pointe (71) qui converge coniquement.

12. Dispositif d'aération de tuyau selon l'une des revendications précédentes, **caractérisé en ce que** le corps de soupape (7) comporte un corps de fermeture (72) séparé qui est situé sur une pointe (71) du corps de soupape et, dans la position d'étanchéité de la soupape d'aération de tuyau (4), est appliqué contre une surface de contact (13) d'une cloison (14) entre la chambre à flotteur (9) et un canal d'aération (15).

13. Dispositif d'aération de tuyau selon l'une des revendications précédentes, **caractérisé en ce que** le corps de soupape (7) et le fluide de travail (8) sont disposés de manière telle, dans un préréglage, que le corps de soupape (7) se trouve dans la position d'étanchéité de la soupape d'aération de tuyau (4).

14. Appareil ménager à circulation d'eau, **caractérisé en ce que** celui-ci comporte un dispositif d'aération de tuyau (1) selon l'une des revendications précédentes.

15. Appareil ménager à circulation d'eau selon la revendication 14, **caractérisé en ce que** la soupape d'aération de tuyau (4) est située au-dessus d'un point (30) de la conduite d'écoulement (2) qui est le plus élevé à l'état de fonctionnement de l'appareil.

16. Appareil ménager à circulation d'eau selon la revendication 14 ou 15, **caractérisé en ce que**
- la conduite d'écoulement (2) destinée à l'évacuation du fluide d'écoulement (3) à pomper comporte un tronçon de conduite (31) vertical à l'état de fonctionnement de l'appareil et un tronçon de conduite (32) plié en forme de U et situé au-dessus, lequel est relié au tronçon de conduite (31) vertical,
- le canal (5) du dispositif d'aération de tuyau (1) est relié à la conduite d'écoulement (2) en aval du tronçon de conduite (32) en forme de U dans le sens de l'écoulement du fluide d'écoulement (3).

17. Appareil ménager à circulation d'eau selon l'une des revendications 14 à 16, **caractérisé en ce que** celui-ci se présente sous la forme d'un lave-vaisselle.
